(19) **Europäisches Patentamt / European Patent Office / Office européen des brevets**

(11) **EP 4 604 586 A1**

(12) **EUROPEAN PATENT APPLICATION**
published in accordance with Art. 153(4) EPC

(43) Date of publication:
20.08.2025 Bulletin 2025/34

(21) Application number: 23884675.2

(22) Date of filing: 24.10.2023

(51) International Patent Classification (IPC):
*H04W 4/06* (2009.01)

(52) Cooperative Patent Classification (CPC):
H04W 4/06; H04W 72/0446; H04W 72/121;
H04W 72/30; Y02D 30/70

(86) International application number:
PCT/CN2023/126286

(87) International publication number:
WO 2024/093743 (10.05.2024 Gazette 2024/19)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 31.10.2022 CN 202211352245

(71) Applicant: Huawei Technologies Co., Ltd.
Shenzhen, Guangdong 518129 (CN)

(72) Inventors:
• LIANG, Jiaxin
Shenzhen, Guangdong 518129 (CN)
• LI, Tong
Shenzhen, Guangdong 518129 (CN)
• LI, Jie
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **METHOD AND APPARATUS FOR CONTROLLING BROADCASTING OF WIRELESS DEVICE, AND ELECTRONIC DEVICE AND MEDIUM**

(57) This disclosure provides a method and an apparatus for controlling broadcasting of a wireless device, an electronic device, and a medium. The method includes: generating, in a plurality of scanning modes, discovery delays associated with broadcast intervals in a broadcast interval set. The discovery delay includes a period of time required for a broadcast signal sent by the wireless device at the broadcast interval to be discovered by a scanning device that is in one of the plurality of scanning modes. The method includes: determining one or more broadcast intervals from the broadcast interval set based on the discovery delay; generating at least one candidate broadcast mode based on the one or more determined broadcast intervals; and determining a broadcast mode used for the wireless device from the at least one candidate broadcast mode. In this manner, a broadcast mode with higher overall performance is provided for the wireless device. In the broadcast mode, lower comprehensive discovery delays can be reached in the plurality of scanning modes, so that the wireless device is discovered more quickly, thereby optimizing experience of a user in discovering a specified wireless device via devices that support different scanning modes.

300

Generate, in a plurality of scanning modes, discovery delays associated with broadcast intervals in a broadcast interval set — 310

Determine one or more broadcast intervals from the broadcast interval set based on the discovery delay — 320

Generate at least one candidate broadcast mode based on the one or more determined broadcast intervals — 330

Determine a broadcast mode used for a wireless device from the at least one candidate broadcast mode — 340

FIG. 3

EP 4 604 586 A1

**Description**

**TECHNICAL FIELD**

Embodiments of this disclosure mainly relate to the field of communication technologies, and more specifically, to a wireless communication technology. Embodiments of this disclosure provide a method and an apparatus for controlling broadcasting of a wireless device, an electronic device, a computer-readable storage medium, and a computer program product.

**BACKGROUND**

With emergence of internet of things technologies, various wireless communication technologies are applied to applications of the internet of everything. For example, communication modules such as Bluetooth low energy (BLE), Wireless Fidelity (Wi-Fi), and 5th generation mobile communication (5G) are deployed on various devices, for these devices to perform wireless communication.

Some internet of things applications provide offline search functions to help users find lost devices. This function mainly depends on a broadcast signal sent by the lost device and scanning of a scanning device that acts as a "good-hearted person". For example, when a user's device, object, or accessory is lost, the lost device enters a lost state and broadcasts a signal indicating that the device is lost to surroundings. The scanning device that acts as the "good-hearted person" discovers, through scanning, whether there is the lost device in a surrounding scenario. In consideration of aspects such as power consumption, the broadcast signal of the lost device is not sent continuously but is sent intermittently, and the scanning device is not always in an open state, but performs scanning intermittently. This results in a discovery delay from starting sending the broadcast signal to discovering the broadcast signal. This brings challenges to the offline search function.

**SUMMARY**

Embodiments of the disclosure provide a solution for controlling broadcasting of a wireless device to provide improved discovery delay performance.

According to a first aspect of the disclosure, a method for controlling broadcasting of a wireless device is provided. The method includes: generating, in a plurality of scanning modes, discovery delays associated with broadcast intervals in a broadcast interval set, where the discovery delay includes a period of time required for a broadcast signal sent by the wireless device at the broadcast interval to be discovered by a scanning device that is in one of the plurality of scanning modes; determining one or more interval intervals from the broadcast interval set based on the discovery delay; generating at least one candidate broadcast mode based on the one or more determined broadcast intervals; determining a broadcast mode used for the wireless device from the at least one candidate broadcast mode; generating, in the plurality of scanning modes, the discovery delays associated with the broadcast intervals in the broadcast interval sets, where the discovery delay includes the period of time required for the broadcast signal sent by the wireless device at the broadcast interval to be discovered by the scanning device that is in the one of the plurality of scanning modes; generating the at least one candidate broadcast mode based on the one or more determined broadcast intervals; and determining the broadcast mode used for the wireless device from the at least one candidate broadcast mode. In this manner, a broadcast mode with higher overall performance is provided for the wireless device. In the broadcast mode, lower comprehensive discovery delays can be reached in the plurality of scanning modes, so that the wireless device is discovered by the scanning device more quickly, thereby optimizing experience of a user in discovering a specified wireless device via devices that are in different scanning modes.

In some embodiments of the first aspect, the determining one or more broadcast intervals from the broadcast interval set may include: in each scanning mode in the plurality of scanning modes, determining a threshold of a discovery delay in the scanning mode; determining at least one candidate broadcast interval from the broadcast interval set based on the threshold; and determining the one or more broadcast intervals based on the at least one candidate broadcast interval in each scanning mode in the plurality of scanning modes. In different scanning modes, a data relationship between the broadcast interval and the discovery delay is different. Based on this manner, broadcast intervals with small discovery delays in the different scanning modes can be obtained. In other words, discovery delays corresponding to the broadcast intervals are small in these scanning modes.

In some embodiments of the first aspect, the determining the one or more broadcast intervals may include: determining the one or more broadcast intervals based on an intersection set of the at least one candidate broadcast interval in each scanning mode in the plurality of scanning modes. In some standard protocols, broadcast intervals are allowed to be discrete, for example, an integer multiple of a time interval. Based on this manner, a common broadcast interval at which a plurality of scanning modes are considered and a small discovery delay is reached can be obtained through a set operation.

In some embodiments of the first aspect, the determining a threshold of a discovery delay in the scanning mode may include: determining the threshold based on a tolerance parameter and a minimum discovery delay in the scanning mode. Based on this manner, a performance range of the discovery delay can be specified, to select a corresponding broadcast interval. For example, a larger tolerance parameter indicates more candidate broadcast intervals that can be selected in the broadcast interval set, and vice versa.

In some embodiments of the first aspect, the generating a candidate broadcast mode may include generating at least one of the following: an alternate mode, where the alternate mode indicates that the wireless device sends broadcast signals at different broadcast intervals in the one or more broadcast intervals; and a superimposition mode, where the superimposition mode indicates that the wireless device sends a broadcast signal at a broadcast interval that is a multiple of the one or more broadcast intervals. In some embodiments, the generated candidate broadcast mode may further include a single mode, where the single mode indicates that the wireless device sends a broadcast signal at one of the one or more broadcast intervals. Based on this manner, a regularly changing broadcast mode is provided, and broadcast signals are sent at a plurality of broadcast intervals with small discovery delays, to obtain small comprehensive discovery delays in the plurality of scanning modes.

In some embodiments of the first aspect, the method may further include: determining an equivalent broadcast interval in the at least one candidate broadcast mode; and filtering the at least one candidate broadcast mode based on the equivalent broadcast interval and a power consumption constraint of the wireless device. Based on this manner, power consumption of the wireless device in the broadcast mode is restricted to meet a power consumption requirement.

In some embodiments of the first aspect, the determining a broadcast mode used for the wireless device from the at least one candidate broadcast mode may include: determining, in each candidate broadcast mode in the at least one candidate broadcast mode, a comprehensive discovery delay in the candidate broadcast mode relative to the plurality of scanning modes; and selecting a candidate broadcast mode with a minimum comprehensive discovery delay from the at least one candidate broadcast mode as the broadcast mode used for the wireless device. Based on this manner, a broadcast mode with a lower comprehensive discovery delay can be further selected from the candidate broadcast mode.

In some embodiments of the first aspect, the determining a comprehensive discovery delay in the candidate broadcast mode relative to the plurality of scanning modes may include: determining, through simulation, a discovery delay in the candidate broadcast mode relative to each scanning mode; and determining the comprehensive discovery delay based on weights of the plurality of scanning modes and the determined discovery delay. Based on this manner, a use environment of the wireless device, for example, a probability that the plurality of scanning modes are used, can be considered, and a broadcast mode with a lower comprehensive discovery delay in a specific environment is used.

In some embodiments of the first aspect, a scanning mode in the plurality of scanning modes may specify a scanning interval and a scanning window within the scanning interval, and the scanning mode is capable of being applied to the scanning device for the scanning device to listen to the broadcast signal from the wireless device in the scanning window. Based on this manner, the wireless device may intermittently send the broadcast signal, and the scanning device only needs to intermittently scan the broadcast signal, to control a power consumption level of the device.

In some embodiments of the first aspect, the determining, in a plurality of scanning modes, discovery delays associated with broadcast intervals in a broadcast interval set may include: in each scanning mode in the plurality of scanning modes, determining, through simulation, a discovery delay corresponding to the broadcast interval in the scanning mode. The discovery delay may be associated with a given percentile value. Based on this manner, a numerical relationship between a broadcast interval and a discovery delay in each scanning mode can be obtained, to select a broadcast interval with a small discovery delay.

According to a second aspect of this disclosure, an electronic device is provided, including a processing unit and a memory. The processing unit executes instructions in the memory, so that the electronic device performs actions. The actions include: generating, in a plurality of scanning modes, discovery delays associated with broadcast intervals in a broadcast interval set, where the discovery delay includes a period of time required for a broadcast signal sent by the wireless device at the broadcast interval to be discovered by a scanning device that is in one of the plurality of scanning modes; determining one or more broadcast intervals from the broadcast interval set based on the discovery delay; generating at least one candidate broadcast mode based on the one or more determined broadcast intervals; and determining a broadcast mode used for the wireless device from the at least one candidate broadcast mode.

According to a third aspect of this disclosure, an apparatus for controlling broadcasting of a wireless device is provided, including: a discovery delay generation unit, configured to generate, in a plurality of scanning modes, discovery delays associated with broadcast intervals in a broadcast interval set, where the discovery delay includes a period of time required for a broadcast signal sent by the wireless device at the broadcast interval to be discovered by a scanning device that is in one of the plurality of scanning modes; a broadcast interval determining unit, configured to determine one or more broadcast intervals from the broadcast interval set based on the discovery delay; a broadcast mode generation unit, configured to generate at least one candidate broadcast mode based on the one or more determined broadcast intervals; and a broadcast mode determining unit, configured to determine a broadcast mode used for the wireless device from the at least one candidate broadcast mode.

According to a fourth aspect of this disclosure, a computer-readable storage medium is provided. The computer-readable storage medium stores one or more computer instructions, and the one or more computer instructions are executed by a processor for the processor to perform the method according to the first aspect of this disclosure.

According to a fifth aspect of this disclosure, a computer program product is provided, including machine-executable instructions. When the machine-executable instructions are executed by a device, the device performs the method according to the first aspect of this disclosure.

## BRIEF DESCRIPTION OF DRAWINGS

With reference to the accompanying drawings and the following detailed descriptions, the foregoing and other features, advantages, and aspects of embodiments of this disclosure become more apparent. In the accompanying drawings, same or similar reference numerals indicate same or similar elements.

FIG. 1A is a diagram of an example environment in which a plurality of embodiments of this disclosure can be implemented;
FIG. 1B is a block diagram of a device according to an embodiment of this disclosure;
FIG. 2A is a diagram of a time relationship between broadcasting and scanning of a wireless device;
FIG. 2B is a curve diagram of an example of a numerical relationship between a broadcast interval and a discovery delay of a wireless device;
FIG. 3 is a schematic flowchart of a method for controlling broadcasting of a wireless device according to an embodiment of this disclosure;
FIG. 4 is a schematic flowchart of a process of generating a discovery delay according to an embodiment of this disclosure;
FIG. 5 is a schematic flowchart of a process of selecting a broadcast interval according to an embodiment of this disclosure;
FIG. 6 is a schematic flowchart of a process of generating a broadcast mode according to an embodiment of this disclosure;
FIG. 7 is a schematic flowchart of a process of selecting a broadcast mode according to an embodiment of this disclosure;
FIG. 8 is a block diagram of an apparatus for controlling broadcasting of a wireless device according to an embodiment of this disclosure; and
FIG. 9 is a block diagram of an example device that may be used to implement an embodiment of this disclosure.

## DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below. It should be noted that numbers or values used in this specification are examples, and are not intended to limit the protection scope of this disclosure.

Some internet of things applications provide offline search functions of wireless devices (for example, a Bluetooth low energy (BLE) device). In an implementation of the offline search function, one piece of important performance is how long it takes for a scanning device (for example, a mobile phone or another device having a BLE communication module) to discover, through scanning, a broadcast signal sent by a lost device (which may also be referred to as a broadcast device in this specification), that is, a "discovery delay". In consideration of various aspects such as power consumption, the broadcast device sends a broadcast signal at a broadcast interval that complies with a power consumption constraint, and a scanning window of the scanning device is not always in an open state, but is opened and closed at a specific time interval in a scanning mode. When the scanning device is in different states (for example, a mobile phone is in a screen-on state, a screen-off state, or a sleep state, or there are mobile phones of different brands or different manufacturers), settings of scanning intervals and scanning windows used in different scanning modes are different. Whether the scanning mode of the scanning device matches the broadcast interval of the broadcast device greatly affects the discovery delay.

In some traditional methods, the discovery delay is reduced by modifying the scanning interval of the scanning device. However, modification of the scanning device involves a plurality of constraints such as power consumption and use of a wireless communication module of another service, and is difficult. In other methods, the broadcast interval of the broadcast device is modified, for example, optimization is performed for a single scanning mode to obtain a broadcast interval that complies with a power consumption constraint and has a minimum discovery delay. However, there may be a plurality of scanning modes in an actual scenario. If only one scanning mode is considered, the obtained broadcast interval cannot make the broadcast device to achieve global optimization. As a result, ignoring exists during broadcast interval optimization. When the broadcast interval is optimized in only one scanning mode, the obtained broadcast interval may cause the broadcast device to have a high discovery delay in another scanning mode.

In view of this, embodiments of this disclosure provide a solution for controlling broadcasting of a wireless device, and more specifically, relate to a solution for providing an efficient broadcast mode used for the wireless device. In this solution, a discovery delay associated with a broadcast interval in a broadcast interval set is first generated in each scanning mode in a plurality of scanning modes, and therefore a numerical relationship between a broadcast interval and a discovery delay in a specific scanning mode is determined. Then, one or more broadcast intervals are determined from the broadcast interval set based on discovery delays in the plurality of scanning modes. For example, the selected broadcast interval makes the broadcast device to have low discovery delays in the plurality of scanning modes. In this solution, at least one candidate broadcast mode is generated based on the one or more determined broadcast intervals. For example, the candidate broadcast mode may be a broadcast mode obtained by combining these broadcast intervals. Then, a broadcast mode used for the wireless device is determined from the at least one candidate broadcast mode. Based on this manner, a broadcast mode with higher overall performance is provided for the wireless device. In the broadcast mode, lower comprehensive discovery delays can be reached in the plurality of scanning modes, so that the wireless device is discovered by the scanning device more quickly, thereby optimizing experience of a user in discovering a specified wireless device in different scanning modes.

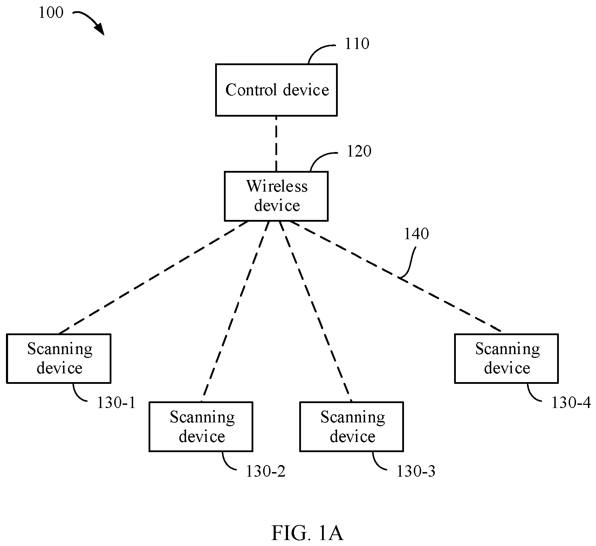

The following describes embodiments of this disclosure with reference to FIG. 1A to FIG. 9.

FIG. 1A is a diagram of an example environment 100 in which a plurality of embodiments of this disclosure can be implemented. As shown in the figure, in the environment 100, a wireless device 120 may be an electronic device having a wireless communication capability (for example, Bluetooth low energy (BLE), Wi-Fi, and 5G). In some embodiments, the wireless device 120 may be an internet of things device, a labeled device, a sensor, a wearable device, or the like, for example, a terminal device such as a smart band, a smart watch, a headset, a stylus, a mobile phone, a notebook computer, or a tablet computer. The wireless device 120 may be configured as a data transmit end, and send a radio broadcast signal 140 on a specified channel. The wireless device 120 may also include a battery and trigger the radio broadcast signal 140 by consuming energy stored in the battery. In consideration of limitations such as power consumption, the wireless device 120 may send broadcast signals 140 at some time points at a configured broadcast interval or in a configured broadcast mode, instead of continuously sending the broadcast signals 140. In this specification, the wireless device 120 is sometimes referred to as a broadcast device, and the two may be used alternatively.

The environment 100 includes scanning devices 130-1 to 130-4 (collectively referred to as a scanning device 130). The scanning device 130 may be, for example, a mobile phone, a notebook computer, a tablet computer, a smart watch, a smart band, a stylus, or an earphone. The scanning device 130 may be an electronic device having a wireless communication capability similar to that of the wireless device 120, and may be configured as a data receive end, to discover a nearby wireless device by listening to whether there is a radio broadcast signal on a specified channel. The scanning device 130 may support a plurality of scanning modes. For example, in consideration of limitations such as power consumption, the scanning device 130 may switch between two states of scanning-on and scanning-off when performing scanning, for example, periodically scanning. A time length between starting scanning and closing scanning is referred to as a scanning window, and an interval between opening of two adjacent scanning windows is referred to as a scanning interval. As an example, the scanning mode may include a self-defined low power consumption mode, equalization mode, low delay mode, and the like, and each mode has its own scanning interval and scanning window. It may be understood that the environment 100 includes any quantity of scanning devices, and is not limited to the case shown in the figure.

The control device 110 is configured to control a broadcast mode in which the wireless device 120 sends the radio broadcast signal. The control device 110 may be, for example, a device having a computing capability, such as a desktop computer, a notebook computer, a mobile phone, a server, a cluster, or a cloud server. The control device 110 may determine the broadcast mode of the wireless device 120 and configure the broadcast mode to the wireless device 120, so that the wireless device 120 sends the broadcast signal 140 in the broadcast mode. For example, in the configured broadcast mode, the wireless device 120 sends broadcast signals 140 at some time points and is in a silent state at other time points, thereby saving energy consumption and making the wireless device to be discovered by the scanning device 130 as early as possible.

The wireless device 120 and the scanning device 130 may collaborate to implement the offline search function mentioned above. Once the wireless device 120 detects that the wireless device 120 is in a lost state (for example, for a period of time, the wireless device 120 is not accessed by a user, or is not operated by the user, or a position or an orientation does not change), the offline search function may be triggered. In this case, the wireless device 120 may send the broadcast signal 140 in the configured broadcast mode. The broadcast signal 140 may carry device information of the wireless device 120 or user information bound to the wireless device 120. In this period, if the scanning device 130 is near the wireless device 120 and scans the broadcast signal 140, the scanning device 130 may upload the device information or the user information of the wireless device 120 to the server, and the server pushes related information to an owner of the lost device.

In some embodiments, the wireless device 120 may be a device having a BLE broadcast capability, and the scanning device 130 may be a device having a BLE scanning capability. The following describes embodiments of this disclosure based on the BLE. It should be understood that embodiments of this disclosure are not limited to a scenario in which device discovery is performed through another radio broadcasting, for example, Wi-Fi and 5G.

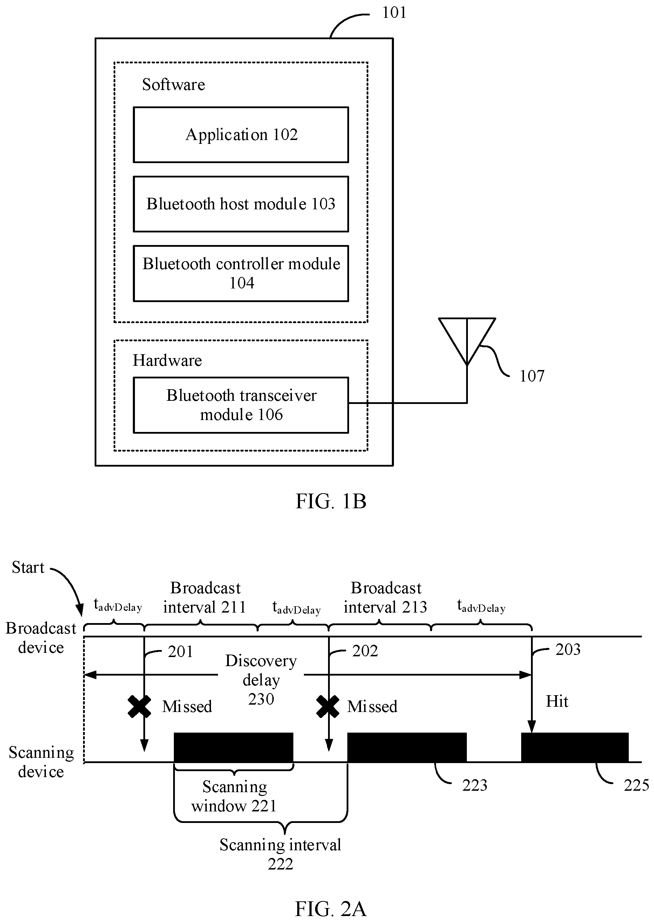

FIG. 1B is a block diagram of a device 101 according to an embodiment of this disclosure. The device 101 may be an example implementation of the wireless device 120 and the scanning device 130 shown in FIG. 1A.

As shown in the figure, in the device 101, an application 102, a Bluetooth host module 103, and a Bluetooth controller module 104 are software modules, and a Bluetooth transceiver module 106 and an antenna 107 are hardware modules.

In some cases, the application 102 may detect that the device 101 is in a lost state, so as to trigger the Bluetooth host module 103 to generate an instruction in a configured broadcast mode, and send the instruction to the Bluetooth controller module 104. In other words, the device 101 works as a broadcast device. The broadcast mode may be pre-stored in the application 102 or the Bluetooth host module. The device 101 may have a plurality of broadcast modes and may select a broadcast mode based on factors such as power consumption, a device status, and the like. In some BLE standard protocols, a broadcast interval of a BLE device is required to be an integer multiple of a specific broadcast interval (for example, 0.625 milliseconds) and in a given range (for example, 20 milliseconds to 10.24 seconds).

In some cases, the Bluetooth host module 103 may determine a scanning mode from the application 102 or another source. In the scanning mode, the device 101 may listen to a broadcast signal on a specified channel. In other words, the device 101 works as the scanning device 130. The device 101 may support a plurality of scanning modes, and may determine, based on power consumption, a device status, and the like, a to-be-used scanning mode, a size of a used scanning window, a size of a used scanning interval, and the like. For example, in a low power consumption mode, a scanning window is 512 milliseconds, and a scanning interval is 5120 milliseconds; in an equalization mode, a scanning window is 1024 milliseconds, and a scanning interval is 4096 milliseconds; and in a low delay mode, a scanning window is 4096 milliseconds, and a scanning interval is 4096 milliseconds. It should be understood that the foregoing parameters of the scanning modes are examples rather than limitations.

Therefore, the Bluetooth host module 103 may send a host control interaction (HCI) instruction to the Bluetooth controller module 104. The Bluetooth controller module 104 controls, according to the instruction, a broadcast triggering occasion and a scanning triggering occasion of the Bluetooth transceiver module 106, so as to control a broadcast interval of the broadcast device or a scanning window and a scanning interval used for scanning by the scanning device.

As mentioned above, the wireless device 120 sends the broadcast signal at the broadcast interval, and the scanning device 130 scans a possible broadcast signal in the scanning window in the scanning mode. In view of this situation, the broadcast signal does not necessarily fall in the scanning window. After the wireless device 120 sends a plurality of broadcast signals, the broadcast signals may be listened to by the scanning device 130, and even the broadcast signals are not found in a long period of time. In this specification, a period of time required for the broadcast signal sent by the wireless device 120 to be discovered, through scanning, by the scanning device 130 is also referred to as a discovery delay.

FIG. 2A is a diagram of a time relationship between broadcasting and scanning. As shown in the figure, it is known that a distance between a wireless device and a scanning device meets a communication condition, and the wireless device starts to send a broadcast signal at a broadcast interval. In some BLE standard protocols, a broadcast interval of a BLE broadcast device is required to include a random delay of a range (for example, 0 milliseconds to 10 milliseconds). It may be understood that a smaller broadcast interval indicates easier discovery of the broadcast signal, but there is a power consumption constraint, and the broadcast interval cannot be set too small.

At the same time, the scanning device performs scanning in a scanning mode, and opens and closes a scanning window within a specific time interval. A scanning feature depends on a size of a scanning interval and a size of the scanning window. It may be understood that a larger proportion of the scanning window indicates a stronger capability of the scanning device 102 to discover the broadcast signal. Similarly, for the purpose of power consumption constraint, the proportion of the scanning window is generally not set too large.

In FIG. 2A, the wireless device sends a broadcast signal 201 after a random delay $t_{advdelay}$. Then, after a broadcast interval 211 and another random delay $t_{advdelay}$, the wireless device sends a broadcast signal 202. Then, after a broadcast interval 213 and a random delay

$t_{advdelay}$, the wireless device sends a broadcast signal 203. At the same time, the scanning device performs scanning based on scanning windows 221, 223, and 225 and a scanning interval 222 that are specified in a scanning mode, and listens to whether there is a broadcast signal on a specified channel. Once the broadcast signal is detected in the scanning window, the wireless device is discovered. As shown in the figure, the broadcast signals 201 and 202 of the wireless device are missed, and the broadcast signal 203 falls in the scanning window 225. Therefore, the wireless device is discovered by the scanning device at a time point at which the broadcast signal 203 is sent. A time interval between starting and hitting of the broadcast signal is a discovery delay 230.

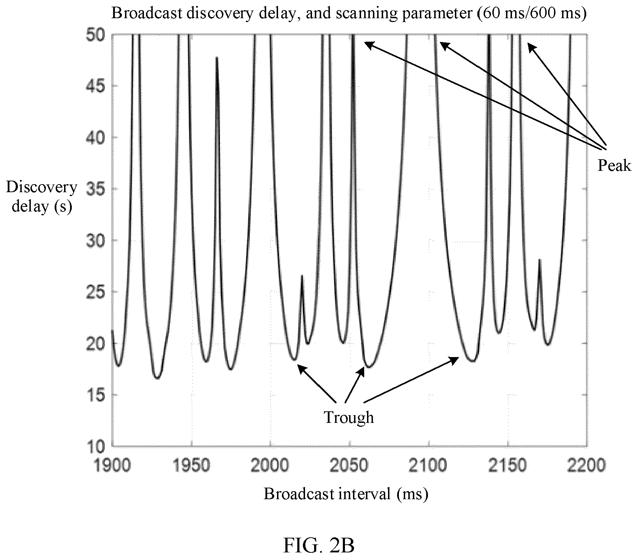

ABLE scanning mode is given, and different BLE broadcast intervals have respective broadcast scan-to-discover delays. Actually, a smaller broadcast interval indicates a higher broadcast frequency. This does not mean that the wireless device is discovered more quickly. FIG. 2B is a curve diagram of an example of a numerical relationship between a broadcast interval and a discovery delay of a wireless device. In FIG. 2B, for a scanning device, a scanning window is 60 milliseconds, and a scanning interval is 600 millisecond. The horizontal axis indicates a broadcast interval of a broadcast device, and the vertical axis indicates a maximum discovery delay of a given percentile value. In any case, a broadcast signal that corresponds to a percentile value and that is in all broadcast signals can be discovered as long as the maximum discovery delay is reached.

It can be learned that the broadcast interval and the discovery delay are in a form of "peak-to-trough". As mentioned above, in some conventional solutions, a better broadcast interval in a specific scanning mode can be found through simulation, that is, a broadcast interval near a trough. This broadcast interval is used to send a broadcast signal, so that the wireless device has a lower discovery delay. However, the broadcast interval determined in this manner may be applied only to a specific scanning mode, and may have a large discovery delay in another scanning mode. Embodiments of this disclosure provide an improved solution. A broadcast mode of a wireless device that sends a broadcast signal is controlled, so that the radio broadcast signal sent in this broadcast mode is more generally applicable to more scanning modes, and has a smaller comprehensive discovery delay.

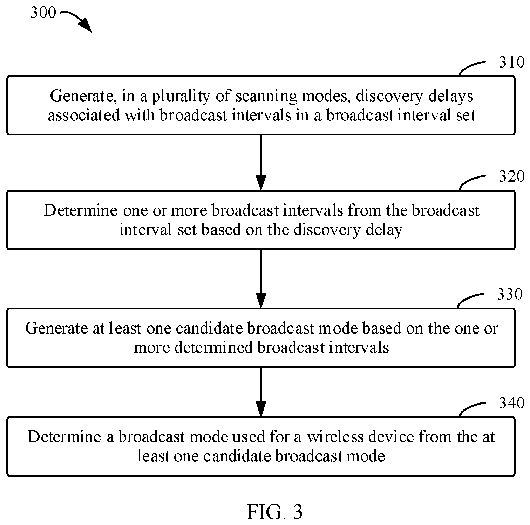

FIG. 3 is a schematic flowchart of a method 300 for controlling broadcasting of a wireless device according to an embodiment of this disclosure. The method 300 may be implemented, for example, by the control device 110 shown in FIG. 1A. It should be understood that the method 300 may further include additional actions that are not shown and/or shown actions may be omitted. The scope of this disclosure is not limited in this aspect.

In a block 310, discovery delays associated with broadcast intervals in a broadcast interval set are generated in a plurality of scanning modes. The step in the block 310 may be performed after a possible scanning mode in a scenario is confirmed. Herein, a scanning device performs scanning in one possible scanning mode, and the wireless device continuously sends broadcast signals at one broadcast interval in the broadcast interval set. A period of time required for the broadcast signal sent by the wireless device to be discovered by the scanning device may be determined through simulation as a discovery delay. The discovery delays are determined through simulation performed for a plurality of times. The discovery delay is associated with a percentile value. In some embodiments, the discovery delay may be a period of time in which the broadcast signal can be ensured to be discovered in any case. The discovery delay may alternatively be a period of time in which the broadcast signal can be discovered in a case in which a given percentile value $p$ (for example, 85%, 90%, or 95%) is met.

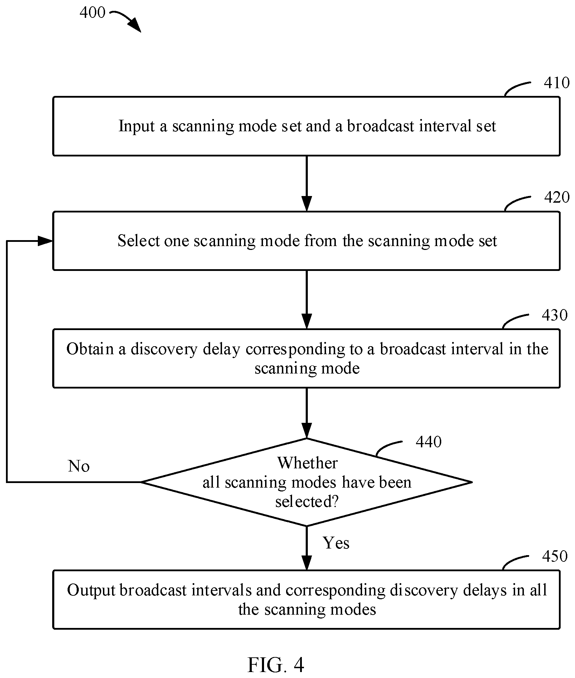

FIG. 4 is a schematic flowchart of a process 400 of generating a discovery delay according to an embodiment of this disclosure. The process 400 may be an example implementation of the step 310. In a block 410, a scanning mode set and a broadcast interval set are input. The scanning mode set includes possible scanning modes in the scenario, and each scanning mode has a scanning interval and a scanning window. A broadcast interval in the broadcast interval set may include a group of discrete broadcast intervals that comply with a standard and that are in an available broadcast interval range.

In a block 420, one scanning mode is selected from the scanning mode set. Specifically, the control device 110 obtains a scanning window and a scanning interval in the selected scanning mode, and inputs the scanning window and the scanning interval into a simulation program.

In a block 430, a discovery delay corresponding to a broadcast interval in the scanning mode is obtained. The control device 110 may obtain a period of time obtained through each simulation by repeatedly running the simulation program. Specifically, the scanning mode is applied to the scanning device, so that the scanning device listens to the broadcast signal from the wireless device in the scanning window, and applies the broadcast interval to the wireless device, so that the wireless device sends the broadcast signal at the broadcast interval. A random delay for sending the broadcast signal can be set in the simulation program. The random delay may be set according to a relevant standard (for example, a BLE standard).

Therefore, the discovery delay corresponding to the broadcast interval in the scanning mode is determined, for example, a discovery delay meeting the given percentile value $p$. A discovery delay corresponding to each broadcast interval is obtained by traversing all broadcast intervals in the broadcast interval set. Therefore, a numerical relationship between a broadcast interval and a discovery delay may be obtained. The numerical relationship may be presented as a curve diagram similar to that in FIG. 2B.

In a block 440, whether all scanning modes have been selected is determined. If not all the scanning modes have been selected, the block 420 is returned, and a next scanning mode is selected from the scanning mode set. If all the scanning modes have been selected, a block 450 is proceeded, and broadcast intervals and corresponding discovery delays in all the scanning modes are output. Output may be a numerical relationship curve between the broadcast interval and a discovery delay in each scanning mode.

Still refer to FIG. 3. In a block 320, one or more broadcast intervals are determined from the broadcast interval set based on the discovery delay. Input of this step may include a set of a broadcast interval and a corresponding discovery delay in each scanning mode, and output includes a broadcast interval at which a "small discovery delay" (that is, a "trough") can be obtained in each scanning mode in the scenario. In other words, one or more output broadcast intervals each have a "small discovery delay" in each scanning mode.

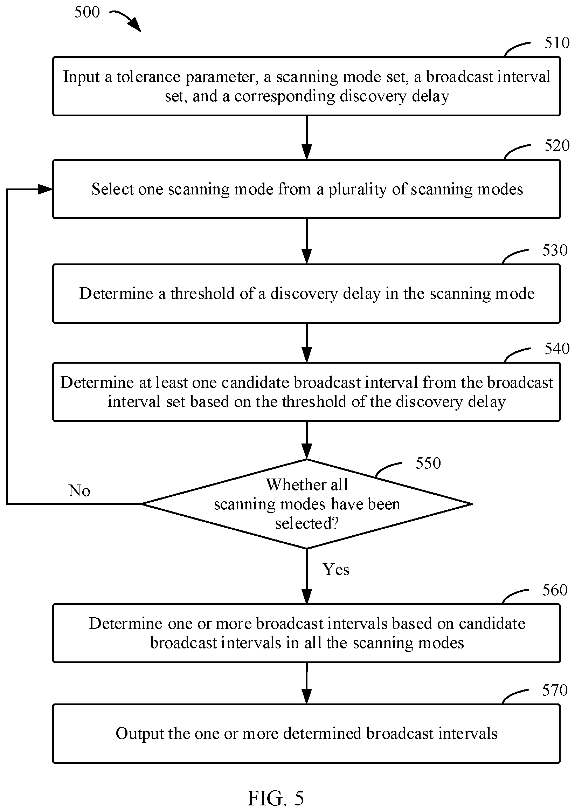

FIG. 5 is a schematic flowchart of a process 500 of selecting a broadcast interval according to an embodiment of this disclosure. The process 500 may be an example implementation of the step 320.

In a block 510, a tolerance parameter, a scanning mode set, a broadcast interval set, and a corresponding discovery delay are input. The tolerance parameter is used to adjust precision of the broadcast interval at which the "small discovery delay" is obtained. A larger value of $\alpha$ indicates more obtained broadcast intervals and coarser precision. A smaller value of $\alpha$ indicates fewer obtained broadcast intervals but finer precision. In other words, the tolerance parameter may be used as a criterion for determining whether the broadcast interval is "good", that is, generating a small discovery delay. $\alpha$ may be a number greater than or equal to 1, and may be adjusted based on a requirement of an actual scenario. Details are described below.

In a block 520, one scanning mode is selected from a plurality of scanning modes. The scanning mode is selected, to obtain all correspondences between broadcast intervals and discovery delays in the broadcast interval set in the scanning mode.

In a block 530, a threshold of a discovery delay in the scanning mode is determined. In some embodiments, a lower bound of the discovery delay, also referred to as a minimum discovery delay, may be determined according to the following equation:

$$\mathrm{L}_{min} = \frac{\mathrm{A} * \mathrm{T}}{\mathrm{W}} * p,$$

where

A is a broadcast interval, T is a scanning interval, W is a scanning window, and $p$ is a percentage value used for obtaining a percentile value. It should be noted that, when

$p$ is equal to 100%, all broadcast signals (100%) can be discovered provided that $L_{min}$ is met; and when $p$ is less than 100%, a corresponding proportion of broadcast signals can be discovered when $L_{min}$ is met.

In some embodiments, the threshold of the discovery delay may be determined as $\alpha \cdot L_{min}$, and the tolerance parameter $\alpha$ may be greater than or equal to 1. Then, in a block 540, at least one candidate broadcast interval is determined from the broadcast interval set based on the threshold of the discovery delay. For example, a broadcast interval whose discovery delay is less than the threshold $\alpha \cdot L_{min}$ may be selected from the broadcast interval set as the candidate broadcast interval, where the discovery delay is the discovery delay obtained in the block 310. The selected candidate broadcast interval is considered as a "trough broadcast interval" and is added to a candidate broadcast interval set in the current scanning mode.

In a block 550, whether all scanning modes have been selected is determined. If there is still an unselected scanning mode, the block 520 is proceeded, and the foregoing blocks 520 to 540 are repeated for the unselected scanning mode. If all the scanning modes have been selected, a block 560 is proceeded, and one or more broadcast intervals are determined based on candidate broadcast intervals in all the scanning modes. Based on the block 520 to the block 540, one candidate broadcast interval set is generated in each scanning mode. In some embodiments, the one or more broadcast intervals may be determined by determining an intersection set between candidate broadcast interval sets in these scanning modes.

In a block 570, the one or more determined broadcast intervals are output. Each broadcast interval in the determined broadcast intervals generates a small discovery delay in any scanning mode. These broadcast intervals are used to generate a new broadcast mode.

Still refer to FIG. 3. In a block 330, at least one candidate broadcast mode is generated based on the one or more determined broadcast intervals. In some embodiments, the one or more broadcast intervals determined in the block 320 are used to generate the candidate broadcast mode. Because there may be a plurality of broadcast intervals in an intersection set between broadcast intervals, different broadcast intervals may be combined to generate different candidate broadcast modes.

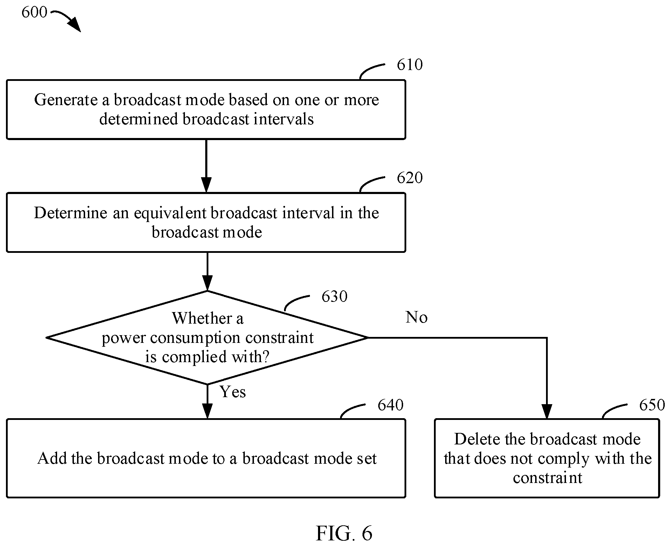

FIG. 6 is a schematic flowchart of a process 600 of generating a broadcast mode according to an embodiment of this disclosure. The process 600 may be an example implementation of the block 330.

In a block 610, a broadcast mode is generated based on one or more determined broadcast intervals. If the broadcast interval determined in the block 320 is a unique broadcast interval a, a single broadcast mode may be generated when the unique broadcast interval a is used as the broadcast interval. If the broadcast interval determined in the block 320 includes more than one broadcast intervals, several of these broadcast intervals may be combined to generate a new broadcast mode.

In some embodiments, the new broadcast mode may include an alternate mode. The alternate mode indicates the broadcast device to send broadcast signals at different broadcast intervals. As an example, two different broadcast intervals are selected: a broadcast interval a and a broadcast interval b. In this case, a generated broadcast mode may be that the broadcast device sequentially sends broadcast signals at a, b, a, and b. Optionally, in the alternate mode, one broadcast interval may be used once or more times and then replaced with another broadcast interval. In other words, there is a proportional relationship between different broadcast intervals. For example, in a 1:2 manner, the broadcast device may sequentially send broadcast signals at a, b, b, a, b, and b. It should be understood that a quantity of selected different broadcast intervals and a proportion between the selected different broadcast intervals may be arbitrary. This is not limited in this disclosure.

The new broadcast mode may further include a superimposition mode. The superimposition mode indicates that the broadcast device sends a broadcast signal at a broadcast interval that is a multiple of the one or more broadcast intervals. As an example, two different broadcast intervals are selected: a broadcast interval a and a broadcast interval b (it is assumed that a<b<2a is met). In this case, a generated broadcast interval may be that the broadcast device sequentially sends broadcast signals at the broadcast interval a, the broadcast interval b, a broadcast interval 2a, and a broadcast interval 2b. It should be understood that a quantity of selected different broadcast intervals may be arbitrary. This is not limited in this disclosure.

In a block 620, an equivalent broadcast interval in the broadcast mode is determined. The equivalent broadcast interval may be determined in the following manner. For a single mode in which the unique broadcast interval is used, the equivalent broadcast interval is the equivalent broadcast interval itself. For the alternate mode in which the different broadcast intervals are used, the equivalent broadcast interval is an arithmetic average of these broadcast intervals. For the superimposition mode in which the different broadcast intervals are used, the equivalent broadcast interval is a harmonic average of these broadcast intervals. An example calculation of the equivalent broadcast interval is shown below:

$$A_{single} = a;$$

$$A_{alternate} = \frac{a+b}{2};$$

and

$$A_{superimposition} = \frac{ab}{a+b},$$

where

a and b are broadcast intervals that form the broadcast mode.

In a block 630, whether the broadcast mode complies with a power consumption constraint is determined. Specifically, whether the power consumption constraint is complied with may be determined based on the equivalent broadcast interval, and a broadcast mode that does not comply with the power consumption constraint is filtered out.

A larger equivalent broadcast interval in the broadcast mode indicates lower brought power consumption. A smaller equivalent broadcast interval in the broadcast mode indicates higher brought power consumption. The power consumption constraint may be determined based on a configuration and a state of the wireless device. For example, when the wireless device is expected to be online as long as possible, a low power consumption constraint is used, and when the wireless device is expected to be discovered as quickly as possible, a looser power consumption constraint may be used.

If it is determined that the broadcast mode complies with the power consumption constraint, a block 640 is proceeded, and the broadcast mode is added to a broadcast mode set as the candidate broadcast mode. If it is determined that the broadcast mode does not comply with the power consumption constraint, the process 600 proceeds to a block 650, and the broadcast mode that does not comply with the power consumption constraint is deleted.

In some embodiments, the foregoing operations about the power consumption constraint may be separate, and are not implemented as specific implementations of the action 330. In other words, after the broadcast mode is generated, the actions shown in the blocks 620 to 650 above are separately applied to filter the candidate broadcast mode generated in the block 330.

Still refer to FIG. 3. In a block 340, a broadcast mode used for the wireless device is determined from the at least one candidate broadcast mode. In some embodiments, a broadcast mode to be deployed to the wireless device is selected from the at least one candidate broadcast mode in the candidate broadcast mode set. In some embodiments, the action in the block 340 may be performed after all broadcast modes that comply with a power consumption constraint requirement are generated.

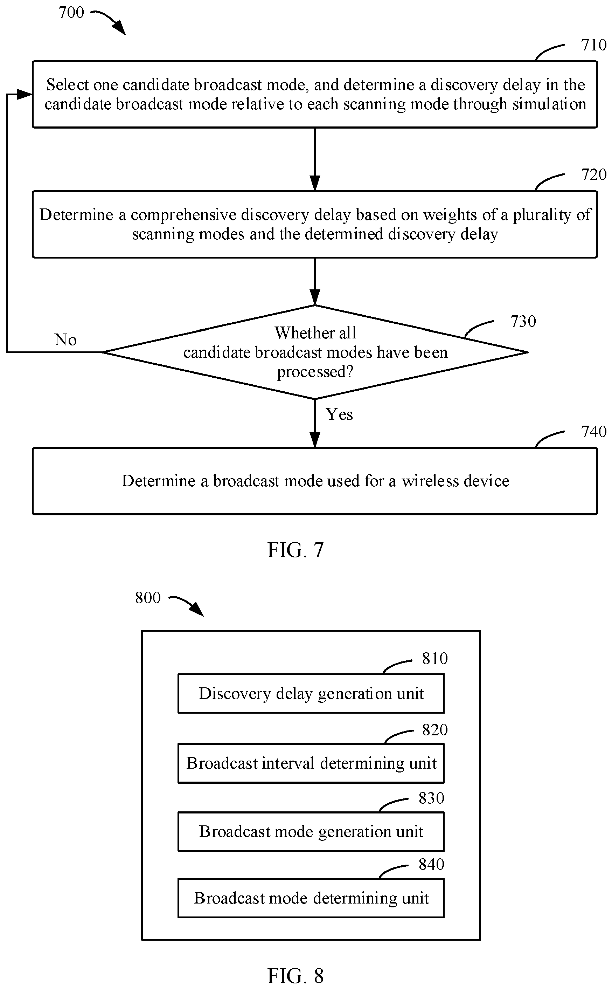

FIG. 7 is a schematic flowchart of a process 700 of selecting a broadcast mode according to an embodiment of this disclosure. The process 700 may be an example implementation of the block 340.

In a block 710, one candidate broadcast mode is selected, and a discovery delay in the candidate broadcast mode relative to each scanning mode is determined through simulation. Specifically, each possible scanning mode and the selected broadcast mode in the scenario are input during simulation, so that a discovery delay in the candidate broadcast mode in the scanning mode is generated.

In a block 720, a comprehensive discovery delay is determined based on weights of a plurality of scanning modes and the determined discovery delay. The weight of the scanning mode may depend on a possibility of using the scanning mode in the scenario. For example, if 50% of devices support or use a first scanning mode, it is determined that a weight of the first scanning mode is 50%, and a weight of another scanning mode is obtained by analogy. The comprehensive discovery delay is calculated as follows:

$$\hat{L} = \sum_{i=1}^{n} \omega_i * L_i,$$

where

$\omega_i$ is a weight of an $i^{th}$ scanning mode, and $L_i$ is a discovery delay in the $i^{th}$ scanning mode.

In a block 730, whether all candidate broadcast modes have been processed is determined. If there is still an unprocessed candidate broadcast mode, the process 700 returns to the block 710, and the actions in the blocks 710 and 720 are repeated. If all the candidate broadcast modes have been processed, the process 700 proceeds to a block 740, a broadcast mode used for the wireless device is determined. In some embodiments, a broadcast mode with a minimum comprehensive discovery delay is selected as the broadcast mode to be applied to the wireless device.

The method 300 shown in FIG. 3 is returned. Additionally, the method 300 may further include: The control device 110 transmits the broadcast mode determined in the block 340 to the wireless device 120. The wireless device 120 receives the broadcast mode and stores the broadcast mode in the device. Then, the wireless device 120 may send a broadcast signal at appropriate time based on the stored broadcast mode when detecting that wireless device 120 is in a lost state. Specifically, the BLE host module 103 may export broadcast time defined in the broadcast mode, and deliver the broadcast time to the Bluetooth controller module 104 through the HCI. The Bluetooth controller module 104 controls the Bluetooth transceiver module 106 to perform broadcasting in the broadcast mode. In some embodiments, the Bluetooth host module 103 may further add a random delay when the broadcast time defined in the broadcast mode arrives.

The foregoing describes in detail the solution for controlling broadcasting of the wireless device according to the plurality of embodiments of this disclosure, and more specifically, provides the solution for generating the broadcast mode of the wireless device. In some scenarios, there is the scanning device that scans the broadcast signal in the scanning mode to discover the wireless device. To make the wireless device to be discovered in a timely manner, in this solution, the plurality of possible scanning modes in the scenario are comprehensively considered, and the broadcast mode with better performance is generated based on features of the broadcast interval and the discovery delay. Based on this manner, in the generated broadcast mode, the lower comprehensive discovery delay can be reached. This helps the scanning device discover the peer device more quickly, and optimizes the experience of the user in discovering the specified wireless device via the scanning device in the different scanning modes. In some embodiments, embodiments of this disclosure further provide the regularly changing broadcast solution, and combine more than one broadcast intervals with the low discovery delays to form the alternate broadcast mode and the superposition broadcast mode, so that the plurality of broadcast intervals with the low discovery delays are combined for broadcasting under the given power consumption constraint. Therefore, in this new broadcast mode, a feature that the discovery delays vary with the different broadcast intervals in the different scanning modes is better used, so that using the comprehensive discovery delay is better than only using one broadcast interval.

FIG. 8 is a block diagram of an apparatus 800 for controlling broadcasting of a wireless device according to an embodiment of this disclosure. The apparatus 800 may be implemented at, for example, the control device 110 shown in FIG. 1A. As shown in the figure, the apparatus 800 includes a discovery delay generation unit 910, a broadcast interval determining unit 820, a broadcast mode generation unit 830, and a broadcast mode determining unit 840.

The discovery delay generation unit 910 is configured to generate, in a plurality of scanning modes, discovery delays associated with broadcast intervals in a broadcast interval set. The discovery delay includes a period of time required for a broadcast signal sent by the wireless device at the broadcast interval to be discovered by a scanning device that is in one of the plurality of scanning modes. The broadcast interval determining unit 820 is configured to determine one or more broadcast intervals from the broadcast interval set based on the discovery delay. The broadcast mode generation unit 830 is configured to generate at least one candidate broadcast mode based on the one or more determined broadcast intervals. The broadcast mode determining unit 840 is configured to determine a broadcast mode used for the wireless device from the at least one candidate broadcast mode.

In some embodiments, the apparatus 800 further includes a communication unit (not shown), and the communication unit is configured to transmit the determined broadcast mode to the wireless device.

In some embodiments, a scanning mode in the plurality of scanning modes specifies a scanning interval and a scanning window within the scanning interval, and the scanning mode is capable of being applied to the scanning device for the scanning device to listen to the broadcast signal from the wireless device in the scanning window.

In some embodiments, the discovery delay generation unit 910 may be configured to: in each scanning mode in the plurality of scanning modes, determine, through simulation, a discovery delay corresponding to the broadcast interval in the scanning mode. The discovery delay may be associated with a given percentile value.

In some embodiments, the broadcast interval determining unit 820 may be configured to: in each scanning mode in the plurality of scanning modes, determine a threshold of a discovery delay in the scanning mode; determine at least one candidate broadcast interval from the broadcast interval set based on the threshold; and determine the one or more broadcast intervals based on the at least one candidate broadcast interval in each scanning mode in the plurality of scanning modes.

In some embodiments of the first aspect, the broadcast interval determining unit 820 may further be configured to determine the one or more broadcast intervals based on an intersection set of the at least one candidate broadcast interval in each scanning mode in the plurality of scanning modes.

In some embodiments, the broadcast interval determining unit 820 may further be configured to determine the threshold based on a tolerance parameter and a minimum discovery delay in the scanning mode.

In some embodiments, the broadcast mode generation unit 830 may further be configured to generate at least one of the following: an alternate mode, where the alternate mode indicates that the wireless device sends broadcast signals at different broadcast intervals in the one or more broadcast intervals; and a superimposition mode, where the superimposition mode indicates that the wireless device sends a broadcast signal at a broadcast interval that is a multiple of the one or more broadcast intervals.

In some embodiments, the apparatus 800 may further include a filtering unit. The filtering unit may be configured to: determine an equivalent broadcast interval in the at least one candidate broadcast mode; and filter the at least one candidate broadcast mode based on the equivalent broadcast interval and a power consumption constraint of the wireless device.

In some embodiments, the broadcast mode determining unit 840 may be further configured to: determine, in each candidate broadcast mode in the at least one candidate broadcast mode, a comprehensive discovery delay in the candidate broadcast mode relative to the plurality of scanning modes; and select a candidate broadcast mode with a minimum comprehensive discovery delay from the at least one candidate broadcast mode as the broadcast mode used for the wireless device.

In some embodiments, the broadcast mode determining unit 840 may be further configured to: determine, through simulation, a discovery delay in the candidate broadcast mode relative to each scanning mode; and determine the comprehensive discovery delay based on weights of the plurality of scanning modes and the determined discovery delay.

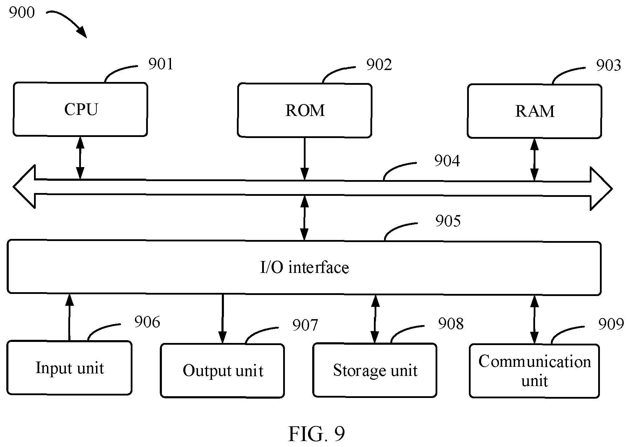

FIG. 9 is a block diagram of an example device 900 that may be used to implement an embodiment of this disclosure. The device 900 may be configured to implement the control device 110 shown in FIG. 1. As shown in the figure, the device 900 includes a central processing unit (CPU) 901, which may perform various appropriate actions and processing according to computer program instructions stored in a read-only memory (ROM) 902 or computer program instructions loaded from a storage unit 908 to a random access memory (RAM) 903. The RAM 903 may further store various programs and data required for an operation of the device 800. The CPU 901, the ROM 902, and the RAM 903 are connected to each other through a bus 904. An input/output (I/O) interface 905 is also connected to the bus 904.

A plurality of components in the device 900 are connected to the I/O interface 905, and include: an input unit 906, for example, a keyboard or a mouse; an output unit 907, for example, various types of displays or speakers; a storage unit 908; and a communication unit 909, for example, various types of wireless communication transceivers. The communication unit 909 allows the device 800 to exchange information/data with another device over a computer network, for example, the internet, and/or various telecommunication networks.

The processes and processing described above, for example, the processes or methods 300, 400, 500, 500, 600, and/or 700, may be performed by the processing unit 901. For example, in some embodiments, the method processes 200, 300, 400, 500, 600, and/or 600 may be implemented as a computer software program, and is tangibly included in a machine-readable medium, for example, the storage unit 908. In some embodiments, some or all of computer programs may be loaded and/or installed on the device 900 via the ROM 902 and/or the communication unit 909. When a computer program is loaded into the RAM 903 and executed by the CPU 901, one or more actions of the processes 200, 300, 400, 500, and/or 600 described above may be performed.

This disclosure may be a method, an apparatus, a system, and/or a computer program product. The computer program product may include a computer-readable storage medium, having computer-readable program instructions thereon for performing various aspects of this disclosure.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (a non-exhaustive list) of the computer-readable storage media include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing instructions on the punched card or the groove protrusion structure, and any suitable combination of the foregoing. The computer-readable storage medium used herein is not to be construed as a transient signal, such as a radio wave or another freely propagating electromagnetic wave, an electromagnetic wave propagating through a waveguide or another transmission medium (such as a light pulse through a fiber-optic cable), or an electrical signal transmitted through a wire.

The computer-readable program instructions described herein may be downloaded from the computer-readable storage medium to respective computing/-processing devices or to an external computer or external storage device through a network such as the internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this disclosure may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a "C" language or a similar programming language. The computer-readable program instructions may be executed completely on a user computer, executed partially on the user computer, executed as a standalone software package, executed partially on the user computer and partially on a remote computer, or executed completely on the remote computer or a server. When a remote computer is involved, the remote computer may be connected to a user computer through any type of network, including a local area network (LAN) or a wide area network (WAN), or may be connected to an external computer (for example, connected by using an internet service provider through the internet). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, so as to implement the various aspects of this disclosure.

The various aspects of this disclosure are described herein with reference to the flowcharts and/or block diagrams of the method, the apparatus (system), and the computer program product according to embodiments of this disclosure. It should be understood that each block of the flowcharts and/or block diagrams and a combination of blocks in the flowcharts and/or block diagrams may be implemented by the computer-readable program instructions.

These computer-readable program instructions may be provided to a processing unit of a general-purpose computer, a special-purpose computer, or another programmable data processing apparatus to produce a machine, so that the instructions, when executed by the processing unit of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement the functions/actions specified in the one or more blocks in the flowcharts and/or block diagrams.

The flowcharts and block diagrams in the accompanying drawings show the system architecture, function, and operation of possible implementations of systems, methods, and computer program products according to various embodiments of this disclosure. In this regard, each block in the flowcharts or block diagrams may represent a module, a program segment, or a part of an instruction, and the module, the program segment, or the part of the instruction includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved. It should also be noted that each block in the block diagrams and/or flowcharts, and the combination of the blocks in the block diagrams and/or flowcharts may be implemented by a special-purpose hardware-based system that performs a specified function or act, or may be implemented by a combination of special-purpose hardware and computer instructions.

Implementations of this disclosure are described above. The foregoing descriptions are examples, not exhaustive, and not limited to the foregoing disclosed implementations. Many modifications and variations are apparent to a person of ordinary skill in the art without departing from the scope and spirit of the described implementations. Selection of terms used in this specification is intended to best explain implementation principles, actual application or improvements to technologies in the market, or to enable another person of ordinary skill in the art to understand the implementations disclosed in this specification.

## Claims

1. A method for controlling broadcasting of a wireless device, comprising:

    generating, in a plurality of scanning modes, discovery delays associated with broadcast intervals in a broadcast interval set, wherein the discovery delay comprises a period of time required for a broadcast signal sent by the wireless device at the broadcast interval to be discovered by a scanning device that is in one of the plurality of scanning modes;
    determining one or more broadcast intervals from the broadcast interval set based on the discovery delay;
    generating at least one candidate broadcast mode based on the one or more determined broadcast intervals; and
    determining a broadcast mode used for the wireless device from the at least one candidate broadcast mode.

2. The method according to claim 1, wherein the determining one or more broadcast intervals from the broadcast interval set comprises:

    in each scanning mode in the plurality of scanning modes,
    determining a threshold of a discovery delay in the scanning mode;
    determining at least one candidate broadcast interval from the broadcast interval set based on the threshold; and
    determining the one or more broadcast intervals based on the at least one candidate broadcast interval in each scanning mode in the plurality of scanning modes.

3. The method according to claim 2, wherein the determining the one or more broadcast intervals comprises:
determining the one or more broadcast intervals based on an intersection set of the at least one candidate broadcast interval in each scanning mode in the plurality of scanning modes.

4. The method according to claim 2, wherein the determining a threshold of a discovery delay in the scanning mode comprises:
determining the threshold based on a tolerance parameter and a minimum discovery delay in the scanning mode.

5. The method according to claim 1, wherein the generating at least one candidate broadcast mode comprises generating at least one of the following:

    an alternate mode, wherein the alternate mode indicates that the wireless device sends broadcast signals at different broadcast intervals in the one or more broadcast intervals; and
    a superimposition mode, wherein the superimposition mode indicates that the wireless device sends a broadcast signal at a broadcast interval that is a multiple of the one or more broadcast intervals.

6. The method according to claim 1, further comprising:

    determining an equivalent broadcast interval in the at least one candidate broadcast mode; and
    filtering the at least one candidate broadcast mode based on the equivalent broadcast interval and a power consumption constraint of the wireless device.

7. The method according to claim 1, wherein the determining a broadcast mode used for the wireless device from the at least one candidate broadcast mode comprises:

    determining, in each candidate broadcast mode in the at least one candidate broadcast mode, a comprehensive discovery delay in the candidate broadcast mode relative to the plurality of scanning modes; and
    selecting a candidate broadcast mode with a minimum comprehensive discovery delay from the at least one candidate broadcast mode as the broadcast mode used for the wireless device.

8. The method according to claim 7, wherein the determining a comprehensive discovery delay in the candidate broadcast mode relative to the plurality of scanning modes comprises:

    determining, through simulation, a discovery delay in the candidate broadcast mode relative to each scanning mode; and
    determining the comprehensive discovery delay based on weights of the plurality of scanning modes and the determined discovery delay.

9. The method according to claim 1, wherein a scanning mode in the plurality of scanning modes specifies a scanning interval and a scanning window within the scanning interval, and the scanning mode is capable of being applied to the scanning device for the scanning device to listen to the broadcast signal from the wireless device in the scanning window.

10. The method according to claim 1, wherein the determining, in a plurality of scanning modes, discovery delays associated with broadcast intervals in a broadcast interval set comprises:
    in each scanning mode in the plurality of scanning modes, determining, through simulation, a discovery delay corresponding to the broadcast interval in the scanning mode, wherein the discovery delay is associated with a given percentile value.

11. An electronic device, comprising:

    a processing unit and a memory, wherein the processing unit executes instructions in the memory, so that the electronic device performs actions, wherein the actions comprise:

        generating, in a plurality of scanning modes, discovery delays associated with broadcast intervals in a broadcast interval set, wherein the discovery delay comprises a period of time required for a broadcast signal sent by the wireless device at the broadcast interval to be discovered by a scanning device that is in one of the plurality of scanning modes;
        determining one or more broadcast intervals from the broadcast interval set based on the discovery delay;
        generating at least one candidate broadcast mode based on the one or more determined broadcast intervals; and
        determining a broadcast mode used for the wireless device from the at least one candidate broadcast mode.

12. The electronic device according to claim 11, wherein the determining one or more broadcast intervals from the broadcast interval set comprises:

        in each scanning mode in the plurality of scanning modes,
        determining a threshold of a discovery delay in the scanning mode;
        determining at least one candidate broadcast interval from the broadcast interval set based on the threshold; and
        determining the one or more broadcast intervals based on the at least one candidate broadcast interval in each scanning mode in the plurality of scanning modes.

13. The electronic device according to claim 12, wherein the determining the one or more broadcast intervals comprises:
    determining the one or more broadcast intervals based on an intersection set of the at least one candidate broadcast interval in each scanning mode in the plurality of scanning modes.

14. The electronic device according to claim 12, wherein the determining a threshold of a discovery delay comprises:
    determining the threshold based on a tolerance parameter and a minimum discovery delay in the scanning mode.

15. The electronic device according to claim 11, wherein the generating at least one candidate broadcast mode comprises generating at least one of the following:

        an alternate mode, wherein the alternate mode indicates that the wireless device sends broadcast signals at different broadcast intervals in the one or more broadcast intervals; and
        a superimposition mode, wherein the superimposition mode indicates that the wireless device sends a broadcast signal at a broadcast interval that is a multiple of the one or more broadcast intervals.

16. The electronic device according to claim 11, the actions further comprise:

        determining an equivalent broadcast interval in the at least one candidate broadcast mode; and
        filtering the at least one candidate broadcast mode based on the equivalent broadcast interval and a power consumption constraint of the wireless device.

17. The electronic device according to claim 11, wherein the determining a broadcast mode used for the wireless device from the at least one candidate broadcast mode comprises:

> determining, in each candidate broadcast mode in the at least one candidate broadcast mode, a comprehensive discovery delay in the candidate broadcast mode relative to the plurality of scanning modes; and
> selecting a candidate broadcast mode with a minimum comprehensive discovery delay from the at least one candidate broadcast mode as the broadcast mode used for the wireless device.

18. The electronic device according to claim 17, wherein the determining a comprehensive discovery delay in the candidate broadcast mode relative to the plurality of scanning modes comprises:

> determining, through simulation, a discovery delay in the candidate broadcast mode relative to each scanning mode; and
> determining the comprehensive discovery delay based on weights of the plurality of scanning modes and the determined discovery delay.

19. An apparatus for controlling broadcasting of a wireless device, comprising:

> a discovery delay generation unit, configured to generate, in a plurality of scanning modes, discovery delays associated with broadcast intervals in a broadcast interval set, wherein the discovery delay comprises a period of time required for a broadcast signal sent by the wireless device at the broadcast interval to be discovered by a scanning device that is in one of the plurality of scanning modes;
> a broadcast interval determining unit, configured to determine one or more broadcast intervals from the broadcast interval set based on the discovery delay;
> a broadcast mode generation unit, configured to generate at least one candidate broadcast mode based on the one or more determined broadcast intervals; and
> a broadcast mode determining unit, configured to determine a broadcast mode used for the wireless device from the at least one candidate broadcast mode.

20. A computer-readable storage medium, wherein the computer-readable storage medium stores one or more computer instructions, and the one or more computer instructions are executed by a processor, so that the processor performs the method according to any one of claims 1 to 10.

21. A computer program product, comprising machine-executable instructions, wherein when the machine-executable instructions are executed by a device, the device performs the method according to any one of claims 1 to 10.

100

110

Control device

120

Wireless device

140

Scanning device

130-1

Scanning device

130-2

Scanning device

130-3

Scanning device

130-4

FIG. 1A

FIG. 1B

FIG. 2A

FIG. 2B

300

310

Generate, in a plurality of scanning modes, discovery delays associated with broadcast intervals in a broadcast interval set

320

Determine one or more broadcast intervals from the broadcast interval set based on the discovery delay

330

Generate at least one candidate broadcast mode based on the one or more determined broadcast intervals

340

Determine a broadcast mode used for a wireless device from the at least one candidate broadcast mode

FIG. 3

400 ⌐

┌─────────────────────────────────────────────────────────┐ ⌐ 410
│                                                         │
│      Input a scanning mode set and a broadcast interval set │
│                                                         │
└─────────────────────────────────────────────────────────┘
                            │
                            ▼
┌─────────────────────────────────────────────────────────┐ ⌐ 420
│                                                         │
│      Select one scanning mode from the scanning mode set │
│                                                         │
└─────────────────────────────────────────────────────────┘
                            │
                            ▼
┌─────────────────────────────────────────────────────────┐ ⌐ 430
│  Obtain a discovery delay corresponding to a broadcast interval in the │
│                       scanning mode                     │
└─────────────────────────────────────────────────────────┘
                            │
                            ▼
              ╱╲ 440
       No   ╱    Whether      ╲
    ◄──────   all scanning modes have been  
             ╲      selected?   ╱
              ╲╱
                            │ Yes
                            ▼
┌─────────────────────────────────────────────────────────┐ ⌐ 450
│  Output broadcast intervals and corresponding discovery delays in all │
│                   the scanning modes                    │
└─────────────────────────────────────────────────────────┘

FIG. 4

500

510

Input a tolerance parameter, a scanning mode set, a broadcast interval set, and a corresponding discovery delay

520

Select one scanning mode from a plurality of scanning modes

530

Determine a threshold of a discovery delay in the scanning mode

540

Determine at least one candidate broadcast interval from the broadcast interval set based on the threshold of the discovery delay

550

Whether all scanning modes have been selected?

No

Yes

560

Determine one or more broadcast intervals based on candidate broadcast intervals in all the scanning modes

570

Output the one or more determined broadcast intervals

FIG. 5

600

610

Generate a broadcast mode based on one or more determined broadcast intervals

620

Determine an equivalent broadcast interval in the broadcast mode

630

Whether a power consumption constraint is complied with?

No

Yes

640

Add the broadcast mode to a broadcast mode set

650

Delete the broadcast mode that does not comply with the constraint

FIG. 6

700

710

Select one candidate broadcast mode, and determine a discovery delay in the candidate broadcast mode relative to each scanning mode through simulation

720

Determine a comprehensive discovery delay based on weights of a plurality of scanning modes and the determined discovery delay

730

No ← Whether all candidate broadcast modes have been processed?

Yes

740

Determine a broadcast mode used for a wireless device

FIG. 7

800

810

Discovery delay generation unit

820

Broadcast interval determining unit

830

Broadcast mode generation unit

840

Broadcast mode determining unit

FIG. 8

900

901
CPU

902
ROM

903
RAM

904

905
I/O interface

906
Input unit

907
Output unit

908
Storage unit

909
Communication unit

FIG. 9

## INTERNATIONAL SEARCH REPORT

| International application No. |
|---|
| **PCT/CN2023/126286** |

### A. CLASSIFICATION OF SUBJECT MATTER

H04W4/06(2009.01)i

According to International Patent Classification (IPC) or to both national classification and IPC

### B. FIELDS SEARCHED

Minimum documentation searched (classification system followed by classification symbols)

IPC:H04W; H04Q; H04B; H04L

Documentation searched other than minimum documentation to the extent that such documents are included in the fields searched

Electronic data base consulted during the international search (name of data base and, where practicable, search terms used)

CNTXT; ENTXTC; WPABSC; ENTXT; WPABS; 3GPP; CJFD: 广播, 间隙, 间隔, 模式, 时延, 发现, 寻找, 丢失, 查找, lost, broadcast+, gap, interval, mode?, search+, scan+, discover+, select+, time, delay

### C. DOCUMENTS CONSIDERED TO BE RELEVANT

| Category* | Citation of document, with indication, where appropriate, of the relevant passages | Relevant to claim No. |
|---|---|---|
| PX | CN 115714960 A (HUAWEI TECHNOLOGIES CO., LTD.) 24 February 2023 (2023-02-24) claims 1-21 | 1-21 |
| A | CN 110891298 A (HUIZHOU TOPBAND ELECTRICAL TECHNOLOGY CO., LTD.) 17 March 2020 (2020-03-17) description, paragraphs [0032]-[0112] | 1-21 |
| A | CN 113812174 A (APPLE INC.) 17 December 2021 (2021-12-17) entire description | 1-21 |
| A | CN 110839271 A (ALIBABA GROUP HOLDING LTD.) 25 February 2020 (2020-02-25) entire description | 1-21 |
| A | WO 2021191780 A2 (TDK CORP.) 30 September 2021 (2021-09-30) entire description | 1-21 |
| A | US 2018101704 A1 (OSPICON SYSTEMS PTE. LTD.) 12 April 2018 (2018-04-12) entire description | 1-21 |

☐ Further documents are listed in the continuation of Box C.    ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **14 December 2023** | **18 December 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/126286**

| Patent document cited in search report | | | Publication date (day/month/year) | Patent family member(s) | | | Publication date (day/month/year) |
|---|---|---|---|---|---|---|---|
| CN | 115714960 | A | 24 February 2023 | None | | | |
| CN | 110891298 | A | 17 March 2020 | None | | | |
| CN | 113812174 | A | 17 December 2021 | WO | 2020214709 | A1 | 22 October 2020 |
| | | | | EP | 3957090 | A1 | 23 February 2022 |
| | | | | EP | 4266710 | A1 | 25 October 2023 |
| | | | | US | 2022201429 | A1 | 23 June 2022 |
| CN | 110839271 | A | 25 February 2020 | WO | 2021057610 | A1 | 01 April 2021 |
| WO | 2021191780 | A2 | 30 September 2021 | WO | 2021191780 | A3 | 18 November 2021 |
| US | 2018101704 | A1 | 12 April 2018 | US | 9959434 | B1 | 01 May 2018 |

Form PCT/ISA/210 (patent family annex) (July 2022)